# EUROPEAN PATENT APPLICATION

(11) **EP 3 839 248 A1**
(43) Date of publication of application: **23.06.2021**
(21) Application number: 19217242.7
(22) Date of filing: 17.12.2019
(51) Int. Cl.: F03D 5/00, B64C 39/02, B64F 3/00

(54) **AIRBORNE WIND TURBINE SYSTEM AND METHOD OF OPERATING SUCH SYSTEM**

(71) Applicant: KiteX IVS, 4000 Roskilde (DK)
(72) Inventor: Neuenschwander, Mathias Lind, 4000 Roskilde (DK); Sigshøj, Christoffer, 4000 Roskilde (DK); Okholm, Andreas Bruun, 4000 Roskilde (DK); Kazemi, Mohammad Hossein, 4000 Roskilde (DK)
(74) Representative: Guardian IP Consulting I/S

(57) **Abstract**

An airborne wind turbine (3) is coupled to a tower (2) by means of a tether (4) and is adapted to switch between a power generating mode and a parked mode by landing or take-off. The tether has such a fixed free tether length (L) between a tether attachment point (6) and the airborne wind turbine that the turbine is prevented from reaching a base surface (5). A docking mechanism (7) is positioned on the tower so that the turbine is able to approach or leave the docking mechanism in a transverse direction (D_{T}) relative to a longitudinal direction of the tower while at least substantially hanging in the tether. The docking mechanism and the turbine are adapted to releasably connect automatically and the docking mechanism is arranged to rotate about the tower and about an at least substantially vertical axis in relation to the base surface.

## Description

The present invention relates to an airborne wind turbine system including a tower and an airborne wind turbine coupled to the tower by means of a tether, the airborne wind turbine system being adapted to switch between a power generating mode in which the airborne wind turbine is flying crosswind and downwind of the tower, thereby harvesting wind energy, and a parked mode, in which the airborne wind turbine is supported by the tower, by landing or take-off of the airborne wind turbine, the tower extending upwards from a base surface and having a longitudinal direction, the tether being connected to the tower at a tether attachment point at a certain longitudinal position of the tower above the base surface, a landing surface for the airborne wind turbine being arranged on the tower between the base surface and the tether attachment point of the tower, and the tether having such a fixed free tether length between the tether attachment point of the tower and the airborne wind turbine at least during landing or take-off that the airborne wind turbine is prevented from reaching the base surface.

US 2019/0177006 A1 discloses a system including an aerial vehicle, a tower, a tether, a gimbal assembly coupled to the tower, and a ring or landing surface coupled to the tower. The tether is connected between the gimbal assembly and the aerial vehicle. When the aerial vehicle is not in flight, the aerial vehicle may hang from the tether or park on the landing surface. In some embodiments, the ring or landing surface may support the tether away from the tower to prevent the aerial vehicle from contacting the tower. The ring may include mechanical coupling means adapted to hold the tether in a fixed position.

US 2015/0180186 A1 discloses a wind energy system in the form of an airborne wind turbine used to facilitate conversion of kinetic energy to electrical energy. The airborne wind turbine includes an aerial vehicle that flies in a path to convert kinetic wind energy to electrical energy. The aerial vehicle is tethered to a ground station via a tether. As a result of continuous circular flights paths, the tether may rotate continuously in one direction. Thus, a cable management apparatus is disclosed that allows for tether rotation and helps reduce strain on the tether. The cable management apparatus may include a support tower, a base platform, a tether gimbal assembly, a flexible coupling, a second flexible coupling, a slip ring, the tether, the aerial vehicle, and a drum. The base platform may be coupled to the drum and rotatably coupled to the support tower. The tether may be used to assist with retrieval of aerial vehicle and to perch the aerial vehicle on a ground side component such as perch platform. The ground station may include a winch that may be configured to pay out and/or reel out the tether to a predetermined length. Further, when the aerial vehicle lands in the ground station, the winch may be configured to reel in the tether. Therefore, the predetermined length of the tether may be much longer than the distance between the tether gimbal assembly and the perch platform.

US 9,327,845 B2 discloses an offshore airborne wind turbine system including an aerial vehicle, an electrically conductive tether having a first end secured to the aerial vehicle and a second end secured to a platform, a rotatable drum positioned on the platform, an aerial vehicle perch extending from the platform, wherein the platform is positioned on a top of a spar buoy. When it is desired to land the aerial vehicle, the electrically conductive tether may be wound onto the rotatable drum, which reels in the aerial vehicle towards the perch extending from the platform. Prior to landing on the perch, the aerial vehicle may transition from a flying mode to a hover mode. After the aerial vehicle transitions to hover mode, the tether may be wound onto the drum until the aerial vehicle comes to rest on the perch. In the flying mode, the tether may extend over a distance much longer than the height of the spar buoy over the sea. In some embodiments, the perch and perch supports may rotate about the top of the spar buoy to allow for a desired positioning of the perch during landing and launch. However, the disclosed spar buoy design may allow for a non-rotating perch. In particular, the spar buoy may float in manner so that the spar buoy follows the wind. In this manner, the perch may always remain in a proper position for landing of the aerial vehicle. By rotating and following the aerial vehicle, the spar buoy platform may remove a yaw axis, which may allow motion of the spar buoy platform tower about its mooring to stabilize motion of the perch along its yaw axis, such as motion in azimuth.

In all of the above-described known systems, the airborne wind turbine is adapted to land and take off in vertical direction with its propellers or rotors directed upwards. Therefore, during landing and take off, these airborne wind turbines have to function as a motor driven aerial vehicle rather than a power producing wind turbine. In fact, during landing and take off, these known airborne wind turbines maneuver in the same way as for instance a quadcopter, whereby the propellers have to carry the complete weight of the quadcopter. In the case of an airborne wind turbine landing and taking off vertically, however, the propellers have to carry both the complete weight of the airborne wind turbine and also the weight of the part of the tether hanging loosely below the airborne wind turbine. Therefore, in these known systems, it is not possible to optimise the propellers generally for power production, because the same propellers are also required to generate a relatively large propulsive thrust at least during take off. Therefore, the propeller design has to be a compromise between an efficient wind turbine rotor and an efficient propeller for an aerial vehicle. The result is that, during power generation, the performance of these known airborne wind turbines is suboptimal.

Furthermore, the above described systems are especially vulnerable to faults in the propeller/motor drive systems doing the take off and landing phase since they rely on these for pitch, roll and thrust control. In reality, this means that no less than eight independent propeller/motor drives can be seen as a viable option for a redundant system configuration.

The object of the present invention is to provide an airborne wind turbine system which is able to generate power more efficiently than known systems.

In view of this object, the landing surface has the form of a docking mechanism being positioned on the tower at such a longitudinal position of the tower that the airborne wind turbine is able to approach or leave the docking mechanism in a transverse direction relative to the longitudinal direction of the tower while at least substantially hanging in the tether having said fixed free tether length being at least substantially stretched between the tether attachment point at the tower and the airborne wind turbine, the docking mechanism and the airborne wind turbine are adapted to releasably connect automatically as the airborne wind turbine approaches the docking mechanism in said transverse direction relative to the longitudinal direction of the tower, and the docking mechanism is arranged to rotate about the tower and about an at least substantially vertical axis in relation to the base surface.

Because the airborne wind turbine is able to releasably connect with the docking mechanism by approaching the docking mechanism in a transverse direction relative to the longitudinal direction of the tower while at least substantially hanging in the tether, propellers of the airborne wind turbine do only have to carry a small fraction of the complete weight of the airborne wind turbine during the landing or take-off procedure, as the weight of the airborne wind turbine is generally carried by the tether during this procedure. Therefore, the propellers of the airborne wind turbine may generally be optimised for power production and not for propulsion. The result is higher energy production.

Because the docking mechanism is arranged to rotate about the tower and about an at least substantially vertical axis in relation to the base surface, the landing and take-off orientation of the airborne wind turbine may always be adapted to the actual wind direction. Thereby, the need for propulsive thrust of the propellers of the airborne wind turbine may be further reduced, and the propellers may be even further optimised for power production in relation to propulsion.

Furthermore, because the airborne wind turbine is substantially hanging in the tether during landing and take-off, the stability of the airborne wind turbine may be increased during landing and take-off, thereby reducing the need for active control during these procedures. Also, the requirements to the level of redundancy in the propeller/motor drive systems may be reduced.

According to the invention, the docking mechanism carrying airborne wind turbine during the parked mode may be arranged at a lower part of the tower which may reduce bending moments in the tower at extreme wind conditions. Furthermore, easy access for servicing may be achieved.

In an embodiment, the airborne wind turbine has a longitudinal direction extending from a tail end to a front end, the front end is provided with at least one main wing, the tail end is provided with at least one tail element, at least two wind turbine rotors are arranged at the front end, the airborne wind turbine is adapted to, in the power generating mode, fly generally in the longitudinal direction extending from the tail end to the front end, and the airborne wind turbine is adapted to releasably connect with or disconnect from the docking mechanism with its longitudinal direction being aligned with said transverse direction relative to the longitudinal direction of the tower. Thereby, the propulsive force of the at least two wind turbine rotors may be aligned with the transverse direction in which the airborne wind turbine approaches or leaves the docking mechanism while at least substantially hanging in the tether, and the propulsive force may be utilised more efficiently.

In an embodiment, the airborne wind turbine is adapted to releasably connect with or disconnect from the docking mechanism with its front end pointing at the docking mechanism. This may increase the stability of the airborne wind turbine both during landing and take-off. Especially during landing, it may be advantageous that the airborne wind turbine may fly in its normal power generating travel direction against the wind.

In a structurally particularly advantageous embodiment, the front end of the airborne wind turbine is provided with a coupling mechanism adapted to releasably connect with a corresponding coupling mechanism of the docking mechanism.

In an embodiment, the tether is connected to the airborne wind turbine at least by means of a bridle having a first bridle segment attached next to a first end of the at least one main wing and a second bridle segment attached next to a second end of the at least one main wing, and the relation between the length of the first bridle segment and the length of the second bridle segment is automatically adjustable by means of a control system of the airborne wind turbine system.

During the landing, take-off, and crosswind flight in the power generating mode, the airborne wind turbine may generally move on a 2D surface of a sphere having a radius corresponding to the fixed free tether length between the tether attachment point of the tower and the airborne wind turbine. For reasons of control and stability, it may be preferred using an airborne wind turbine with an asymmetrical bridle during the power generating mode. In this case, the length of the first bridle segment is different than the length of the second bridle segment. However, this may result in the lift from the main wing having a sideways component which may make navigation during landing and take-off difficult in strong wind. Therefore, it may be advantageous adjusting the relation between the length of the first bridle segment and the length of the second bridle segment by means of a control system during landing and take-off. Preferably, this relation may be adjusted so that the at least one main wing of the airborne wind turbine is at least substantially or at least approximately level with the base surface, such as a ground surface, during landing and take-off.

In an embodiment, the docking mechanism and/or the airborne wind turbine is/are provided with tapering guide elements adapted to guide the movement of the airborne wind turbine just before the airborne wind turbine connects releasably with the docking mechanism. Thereby a smooth and stable landing procedure may be ensured. Furthermore, a stable connection between the airborne wind turbine and the docking mechanism may be facilitated.

In an embodiment, the docking mechanism is provided with tapering guide elements adapted to guide the movement of a bridle connecting the tether with the airborne wind turbine just before the airborne wind turbine connects releasably with the docking mechanism. Thereby an even more smooth and stable landing procedure may be ensured. Furthermore, an even more stable connection between the airborne wind turbine and the docking mechanism may be facilitated.

In an embodiment, the tower is provided with a tether guide system including a ringformed element surrounding the tether and being arranged displaceably along the tower from a resting position at the tether attachment point of the tower to a docking position near the docking mechanism. Thereby, the airborne wind turbine may be forced to approach the docking mechanism by displacing the ringformed element in the direction of the docking mechanism. This may for instance be advantageous in a situation where the control of the airborne wind turbine has been more or less lost or for instance in a situation of extreme weather. Furthermore, the ringformed element may be used, possibly as an additional element, to releasably hold the airborne wind turbine in place in its parked mode at the docking mechanism.

The present invention further relates to a method of operating an airborne wind turbine system including a tower and an airborne wind turbine coupled to the tower by means of a tether, whereby the airborne wind turbine system is switching between a power generating mode in which the airborne wind turbine is flying crosswind and downwind of the tower, thereby harvesting wind energy, and a parked mode, in which the airborne wind turbine is supported by the tower, by landing or take-off of the airborne wind turbine, the tower extending upwards from a base surface and having a longitudinal direction, the tether being connected to the tower at a tether attachment point at a certain longitudinal position of the tower above the base surface, whereby the airborne wind turbine lands on and takes off from a landing surface being arranged on the tower between the base surface and the tether attachment point of the tower, and the tether having such a fixed free tether length between the tether attachment point of the tower and the airborne wind turbine at least during landing or take-off that the airborne wind turbine is prevented from reaching the base surface.

The method is characterised in that the landing surface has the form of a docking mechanism, in that the airborne wind turbine approaches or leaves the docking mechanism in a transverse direction relative to the longitudinal direction of the tower while at least substantially hanging in the tether having said fixed free tether length being at least substantially stretched between the tether attachment point at the tower and the airborne wind turbine, in that the docking mechanism and the airborne wind turbine automatically connect releasably as the airborne wind turbine approaches the docking mechanism in said transverse direction relative to the longitudinal direction of the tower, and in that the docking mechanism, if necessary, is rotated about the tower and about an at least substantially vertical axis in relation to the base surface in order to adapt to the general direction of wind at least for take-off. Thereby, the above-discussed features may be obtained.

In an embodiment, the airborne wind turbine has a longitudinal direction extending from a tail end to a front end, the front end is provided with at least one main wing, the tail end is provided with at least one tail element, at least two wind turbine rotors are arranged at the front end, the airborne wind turbine, in the power generating mode, is generally flying in the longitudinal direction extending from the tail end to the front end, and the airborne wind turbine releasably connects with or disconnects from the docking mechanism with its longitudinal direction being aligned with said transverse direction relative to the longitudinal direction of the tower. Thereby, the above-discussed features may be obtained.

In an embodiment, the airborne wind turbine releasably connects with or disconnects from the docking mechanism with its front end pointing at the docking mechanism. Thereby, the above-discussed features may be obtained.

In an embodiment, the front end of the airborne wind turbine is provided with a coupling mechanism releasably connecting with a corresponding coupling mechanism of the docking mechanism when landing. Thereby, the above-discussed features may be obtained.

In an embodiment, the tether is connected to the airborne wind turbine at least by means of a bridle having a first bridle segment attached next to a first end of the at least one main wing and a second bridle segment attached next to a second end of the at least one main wing, and the relation between the length of the first bridle segment and the length of the second bridle segment is adjusted during landing and/or take-off. Thereby, the above-discussed features may be obtained.

In an embodiment, the docking mechanism and/or the airborne wind turbine is/are provided with tapering guide elements guiding the movement of the airborne wind turbine just before the airborne wind turbine connects releasably with the docking mechanism, and , preferably, the docking mechanism is provided with tapering guide elements guiding the movement of a bridle connecting the tether with the airborne wind turbine just before the airborne wind turbine connects releasably with the docking mechanism. Thereby, the above-discussed features may be obtained.

In an embodiment, the tower is provided with a tether guide system including a ringformed element surrounding the tether, and , during landing, the ringformed element is displaced along the tower from a resting position at the tether attachment point of the tower to a docking position near the docking mechanism. Thereby, the above-discussed features may be obtained.

The invention will now be explained in more detail below by means of examples of embodiments with reference to the very schematic drawing, in which
Fig. 1 is a perspective view illustrating an airborne wind turbine system according to the invention in power generating mode;
Fig. 2 is a perspective view illustrating the airborne wind turbine system of Fig. 1 during landing;
Fig. 3 is a perspective view illustrating the airborne wind turbine system of Fig. 1 in parked mode;
Fig. 4 is a perspective view illustrating on a larger scale an airborne wind turbine and a docking mechanism of the airborne wind turbine system of Fig. 1 at a first stage during landing;
Fig. 5 is a perspective view corresponding to that of Fig. 4 at a second stage during landing;
Fig. 6 is a perspective view corresponding to that of Fig. 4, in the almost completely landed stage, i.e. almost the parked mode of the airborne wind turbine at the docking mechanism;
Fig. 7 is a perspective cross-sectional view of the docking mechanism of the airborne wind turbine system of Fig. 1;
Fig. 8 is a cross-sectional view of the airborne wind turbine and the docking mechanism of the airborne wind turbine system of Fig. 1, in the parked mode;
Figs. 9 to 11 illustrate in cross-sectional views the locking procedure of a locking mechanism of the airborne wind turbine and the docking mechanism of the airborne wind turbine system of Fig. 1;
Fig. 12 is a perspective view illustrating an airborne wind turbine and an alternative embodiment of a docking mechanism of the airborne wind turbine system according to the invention, during landing;
Fig. 13 is a perspective view illustrating the airborne wind turbine and alternative embodiment of the docking mechanism of Fig. 12, in the parked mode;
Fig. 14 is a perspective view illustrating an airborne wind turbine and a further alternative embodiment of a docking mechanism of the airborne wind turbine system according to the invention, in the parked mode;
Fig. 15 is a perspective view illustrating an airborne wind turbine according to the invention during landing, before adjustment of the bridle;
Fig. 16 is a perspective view illustrating the airborne wind turbine of Fig. 15, after adjustment of the bridle;
Fig. 17 is a perspective view illustrating another embodiment of an airborne wind turbine system according to the invention during a first stage of landing;
Fig. 18 is a perspective view illustrating the embodiment of Fig. 17, in the parked mode;
Figs. 19 to 22 illustrate different stages of the landing procedure of the embodiment of an airborne wind turbine system of Figs. 17 and 18; and
Fig. 23 is a top view of the airborne wind turbine system of Fig. 1 illustrating different stages during landing.

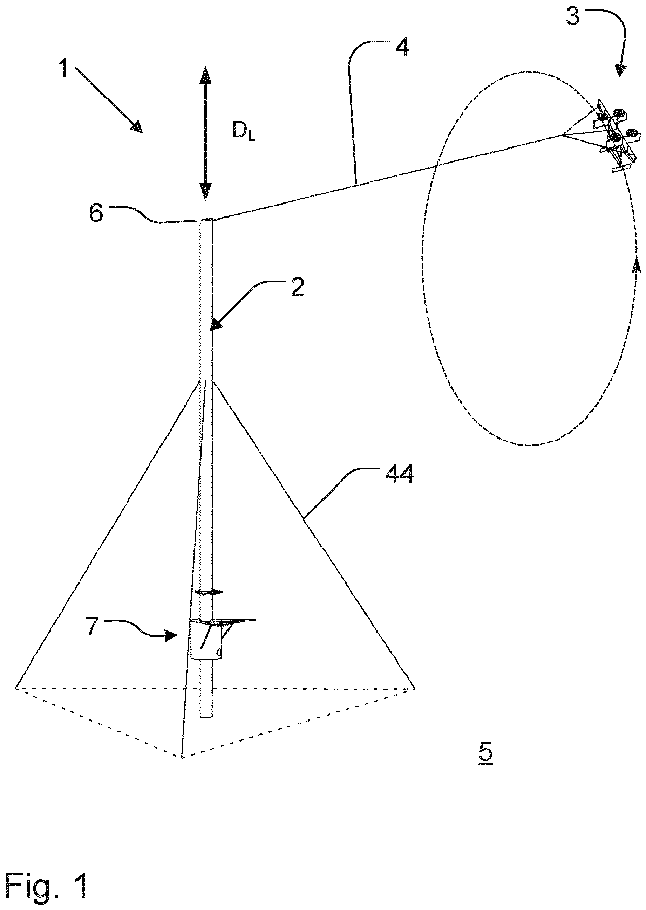

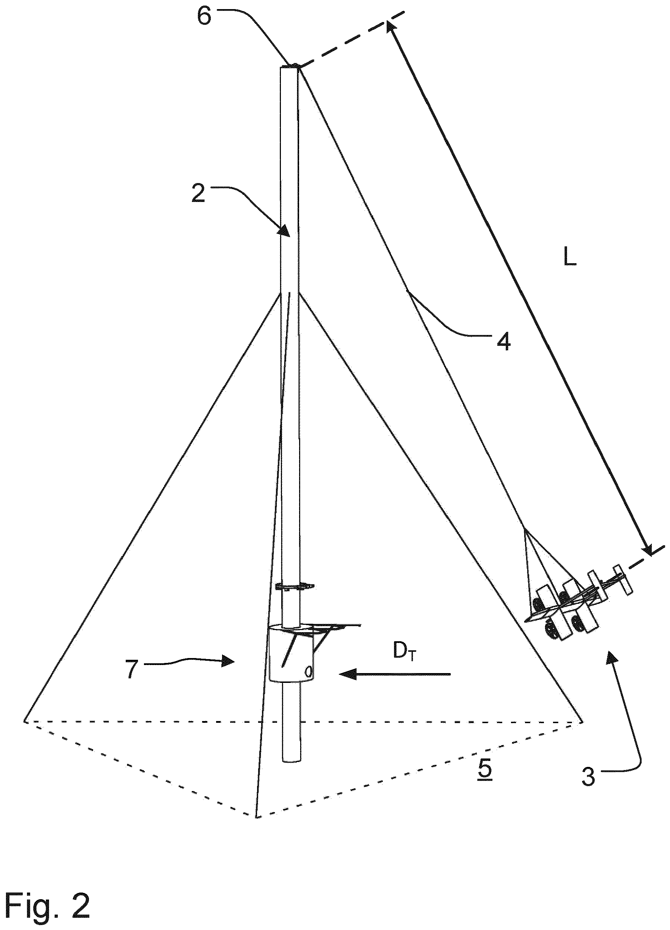

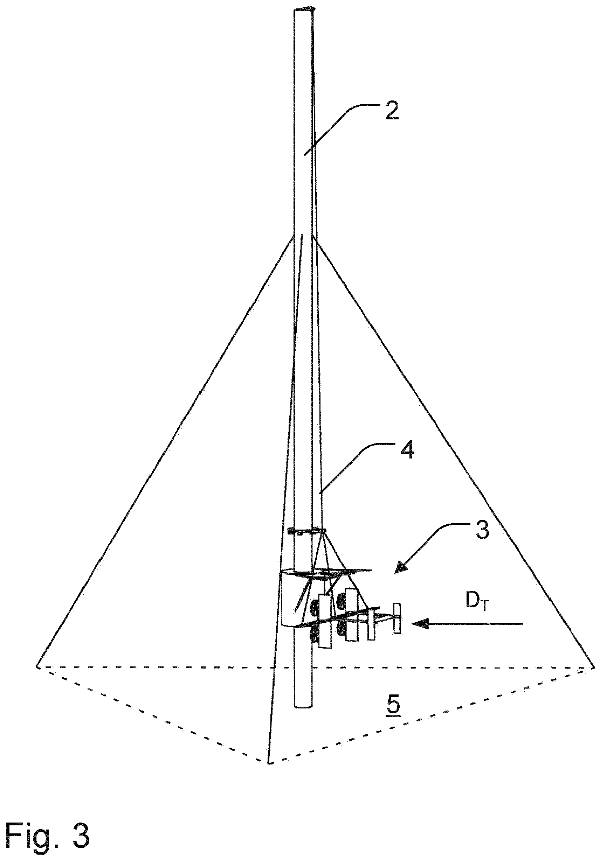

Figs. 1 to 3 show an embodiment of an airborne wind turbine system 1 according to the present invention, including a tower 2 and an airborne wind turbine 3 in the form of a kite coupled to the tower 2 by means of a tether 4. The airborne wind turbine system 1 is adapted to switch between a power generating mode illustrated in Fig. 1 in which the airborne wind turbine 3 is flying crosswind and downwind of the tower 2, thereby harvesting wind energy, and a parked mode illustrated in Fig. 3, in which the airborne wind turbine 3 is supported by the tower 2. The airborne wind turbine system 1 is adapted to switch between the power generating mode and the parked mode by landing or take-off of the airborne wind turbine 3 as illustrated in Fig. 2. The airborne wind turbine 3 is controlled wirelessly or via the tether 4 by means of a not shown control system.

The tower 2 extends upwards from a base surface 5 and has a longitudinal direction D_{L}. The tether 4 is connected to the tower 2 at a tether attachment point 6 at a certain longitudinal position of the tower 2 above the base surface 5.

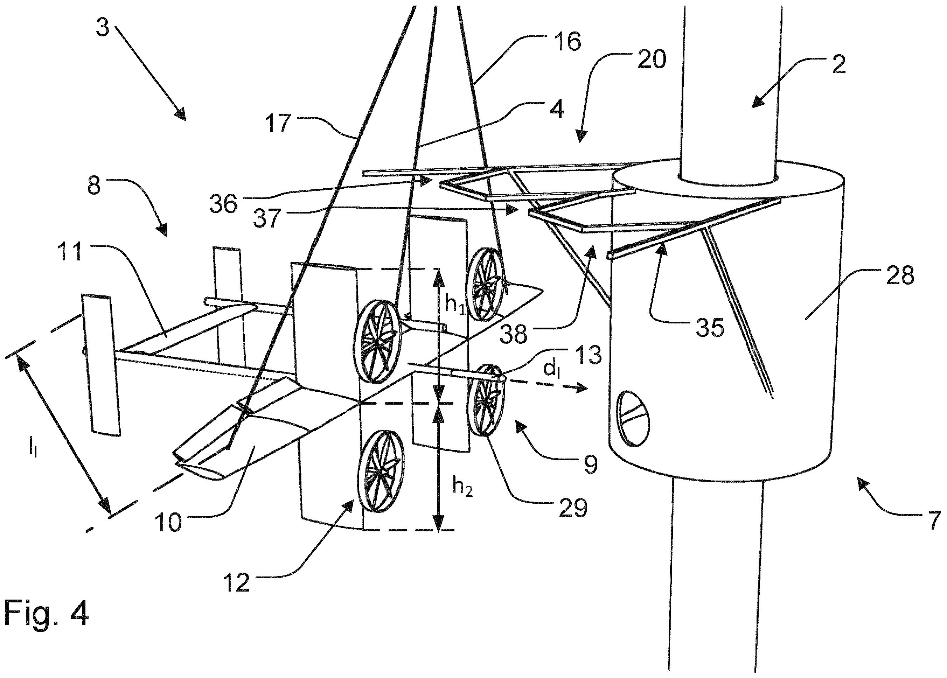

A landing surface in the form of a docking mechanism 7 for the airborne wind turbine 3 is arranged on the tower 2 between the base surface 5 and the tether attachment point 6 of the tower 2. As seen in Figs. 2 and 3, the tether 4 has, at least during landing or take-off, such a fixed free tether length L between the tether attachment point 6 of the tower 2 and the airborne wind turbine 3 that the airborne wind turbine is prevented from reaching the base surface 5. In the illustrated embodiment, the tether 4 is connected to the airborne wind turbine 3 by means of a bridle 15 as described in further detail below. For simplicity, the tether 4 is understood to include the bridle 15 so that, as illustrated in Fig. 2, the fixed free tether length L is defined as the length of the tether 4 from the tether attachment point 6 to the attachment of the bridle 15 on the airborne wind turbine 3. As indicated in Fig. 4, the airborne wind turbine 3 has a first height h₁ above the attachment of the bridle 15 and a second height h₂ below the attachment of the bridle 15 so that the total height of the airborne wind turbine 3 is h₁ + h₂. In the illustrated embodiment, h₁ + h₂. Furthermore, the airborne wind turbine 3 has a longest longitudinal length lₗ from the attachment of the bridle 15 to the tail end. Therefore, said fixed free tether length L plus the greatest one of the second height h₂ of the airborne wind turbine 3 and the longest longitudinal length lₗ must be smaller than the distance of the tether attachment point (6) along the longitudinal direction of the tower (2) above the base surface (5) in order to prevent the airborne wind turbine 3 from reaching the base surface 5. Although the tether 4 has said fixed free tether length L during landing and take-off the tether may possibly be rolled out to a longer length during the power generating mode.

As illustrated in Figs. 2 and 3, according to the present invention, the docking mechanism 7 is positioned on the tower 2 at such a longitudinal position of the tower 2 that the airborne wind turbine 3 is able to approach or leave the docking mechanism 7 in a transverse direction D_{T} relative to the longitudinal direction D_{L} of the tower 2 while at least substantially hanging in the tether 4 having said fixed free tether length L being at least substantially stretched between the tether attachment point 6 at the tower 2 and the airborne wind turbine 3. As understood, during the power generating mode as well as during landing and take-off, the airborne wind turbine 3 generally moves on a sphere having a radius corresponding to said fixed free tether length L and an origin defined by the tether attachment point 6 of the tower 2. Therefore, as the airborne wind turbine 3 approaches the docking mechanism 7 in said transverse direction D_{T}, the transverse direction D_{T} approaches a right angle in relation to the longitudinal direction D_{L} of the tower 2. Depending, however, on the protrusion of the docking mechanism 7 from the tower 2, said transverse direction D_{T} is not able to completely reach a right angle in relation to the longitudinal direction D_{L} of the tower 2. In the illustrated embodiment, wherein the tower 2 is vertical, said transverse direction D_{T} is at least approximately horizontal.

In some embodiments, the tower 2 may include a lattice structure and guy wires, in other embodiments the tower 2 may be tubular, and in other embodiments the tower 2 may be a buoy. In the case that the tower 2 is a buoy, said transverse direction D_{T} may deviate from the horizontal according the waves of the sea or other water surface.

The docking mechanism 7 and the airborne wind turbine 3 are adapted to releasably connect automatically as the airborne wind turbine approaches the docking mechanism 7 in said transverse direction D_{T} relative to the longitudinal direction D_{L} of the tower 2.

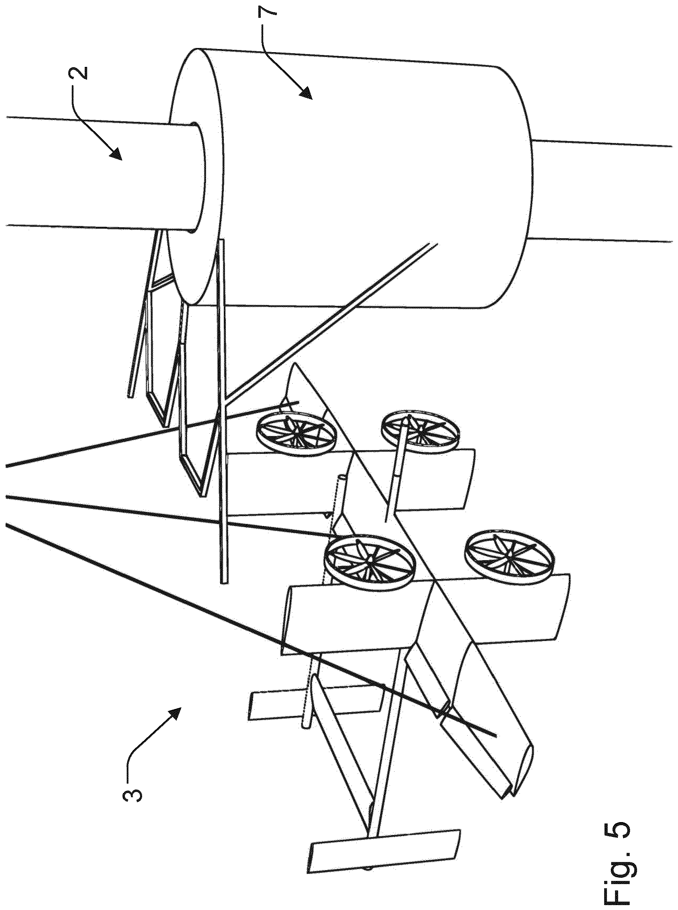

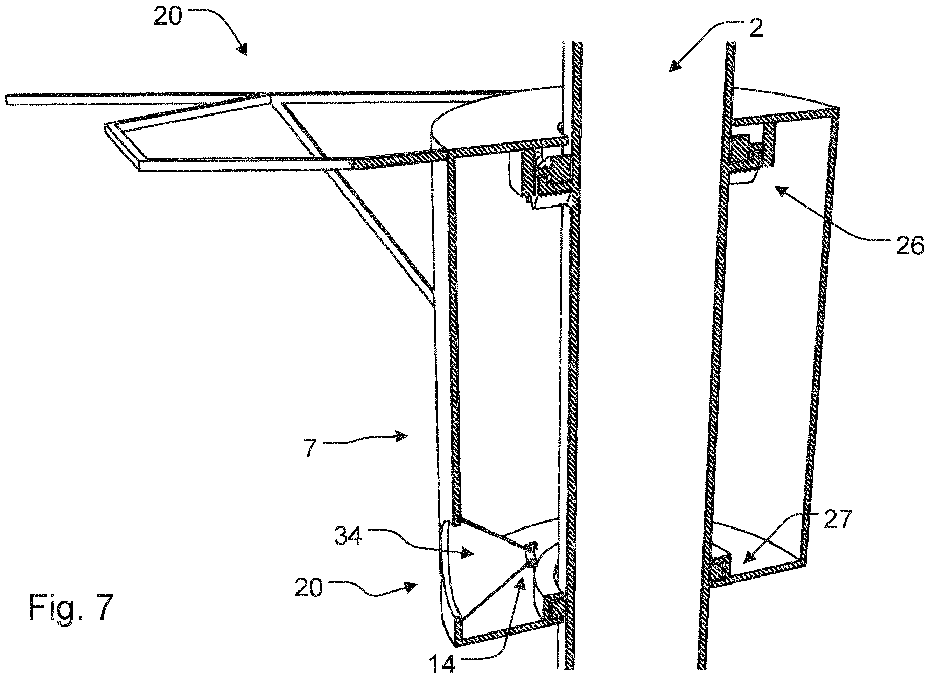

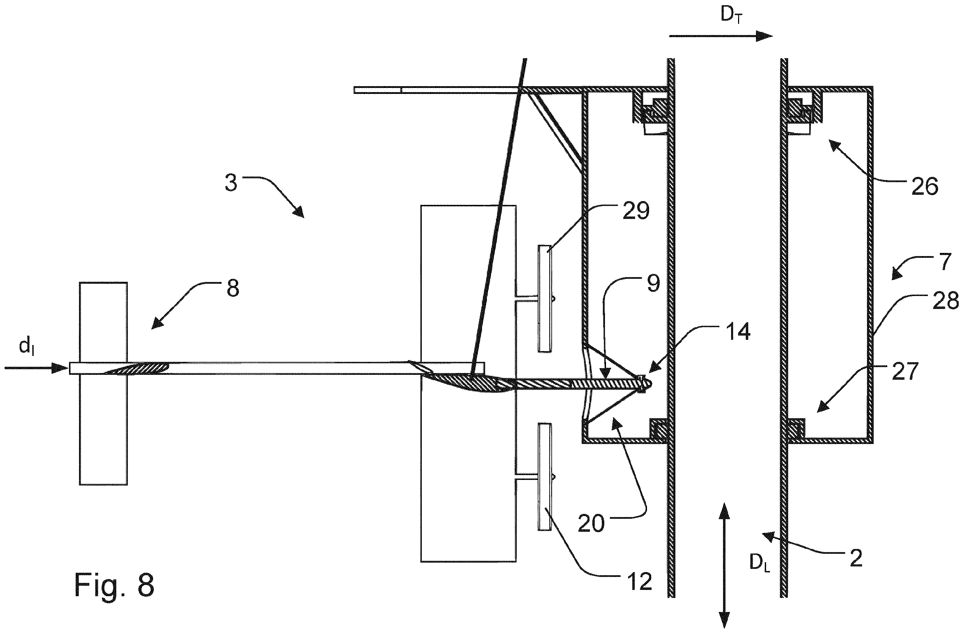

Furthermore, the docking mechanism 7 is arranged to rotate about the tower 2 and about an at least substantially vertical axis in relation to the base surface 5. In the illustrated embodiment, wherein the tower 2 is vertical, the docking mechanism 7 is arranged to rotate in relation to the tower 2 about the vertical longitudinal direction D_{L} of the tower 2 as seen in Figs. 4 and 5. As seen in Figs. 7 and 8, the docking mechanism 7 has the form of a cylinder 28 arranged rotatable about the tower 2 by means of upper and lower bearings 26, 27.

In the illustrated embodiment, the tower 2 is fixed to the base surface 5 in the form of the ground. However, in the case that the tower 2 is a buoy, the buoy may sway in the wind. If a longitudinal direction of the tower is directed obliquely in relation to the base surface 5 in the form of the sea surface, the tower itself may simply rotate about an at least substantially vertical axis at the sear surface, whereby the docking mechanism 7 may be fixed on the tower so that it may rotate about the tower 2 and about said at least substantially vertical axis in relation to the base surface 5.

Because the docking mechanism 7 is arranged to rotate about the tower 2 and about an at least substantially vertical axis in relation to the base surface 5, the landing and take-off orientation of the airborne wind turbine 3 may always be adapted to the actual wind direction. Thereby, the need for propulsive thrust of the propellers of the airborne wind turbine 3 may be further reduced, and the propellers may be even further optimised for power production in relation to propulsion. The docking mechanism 7 may be activated for rotation by an actuator or controlled passively by the wind.

As illustrated in Fig. 4, the airborne wind turbine 3 has a longitudinal direction dₗ extending from a tail end 8 to a front end 9. The front end 9 is provided with a main wing 10, the tail 8 end is provided with a tail element 11, and four wind turbine rotors 12 are arranged at the front end 9. Each wind turbine rotor 12 is during landing or take-off driven by means of a not shown electric drive which during the power generating mode functions as an electric power generator. The electric power is conducted to the ground via the tether 4. As seen, the wind turbine rotors 12 are provided with shrouds 29 in order to prevent them from hitting the docking mechanism 7. In this regard, the wind turbine rotors 12 may also be provided with nosecones. The airborne wind turbine 3 is adapted to, in the power generating mode, fly generally in the longitudinal direction dₗ extending from the tail 8 end to the front end 9. As illustrated in Fig. 8, the airborne wind turbine 3 is adapted to releasably connect with or disconnect from the docking mechanism 7 with its longitudinal direction dₗ being aligned with said transverse direction D_{T} relative to the longitudinal direction D_{L} of the tower 2.

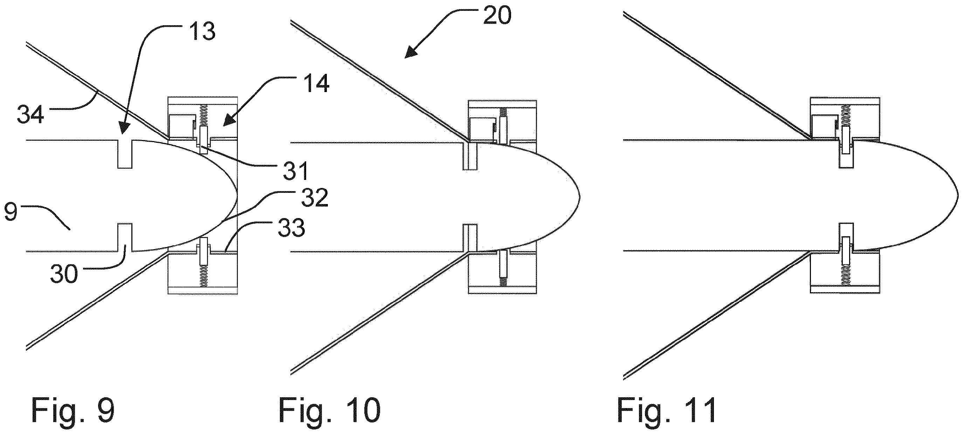

Furthermore, as illustrated in Fig. 8, the airborne wind turbine 3 is adapted to releasably connect with or disconnect from the docking mechanism 7 with its front 9 end pointing at the docking mechanism 7. In the illustrated embodiment, the front end 9 of the airborne wind turbine 3 is provided with a coupling mechanism 13 adapted to releasably connect with a corresponding coupling mechanism 14 of the docking mechanism 7. As seen in Figs. 9 to 11, the coupling mechanism 13 of the front end 9 has the form of a circumferential groove 30 in a cylindrical face of the front end 9, and the coupling mechanism 14 of the docking mechanism 7 has the form of a number of spring biased taps 31 or other suitable elements adapted to engage said circumferential groove 30. When the airborne wind turbine 3 releasably connects with the docking mechanism 7, a rounded tip 32 of the front end 9 is pressed into a corresponding connection hole 33 of the docking mechanism 7 in which the taps 31 are arranged radially extending and pushes the taps 31 against their spring bias so that the front end 9 may pass into the connection hole 33, as seen in Figs. 9 and 10. Subsequently, the taps 31 engage the circumferential groove 30 and locks the front end 9 in the connection hole 33 as seen in Fig. 11. When the airborne wind turbine 3 has to disconnect from the docking mechanism 7, the spring biased taps 31 are displaced out of engagement with the circumferential groove 30 by means of a not shown automatic mechanism.

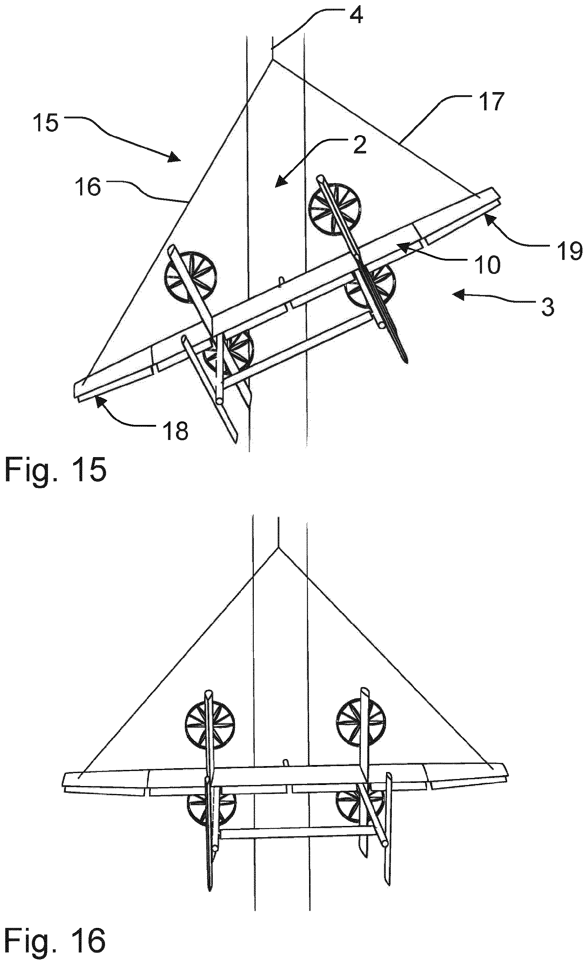

In the embodiment illustrated in Figs. 15 and 16, the tether 4 is connected to the airborne wind turbine 3 by means of the bridle 15 having a first bridle segment 16 attached next to a first end 18 of the at least one main wing 10 and a second bridle segment 17 attached next to a second end 19 of the at least one main wing 10. The relation between the length of the first bridle segment 16 and the length of the second bridle 17 segment is automatically adjustable by means of the control system of the airborne wind turbine system 1. Said adjustment may be performed by a relatively small electric motor rolling in/out part of the first bridle segment 16 and/or the second bridle segment 17. The first bridle segment 16 and the second bridle segment 17 may be connected by a bridle part along the main wing 10 so that said electric motor would just need to displace said bridle part along the wing. Any other suitable arrangement could be used for the adjustment. As seen, in Fig. 15, the bridle 15 is asymmetric in that the first bridle segment 16 is longer than the second bridle segment 17. This configuration may be advantageous during operation of the airborne wind turbine system 1 in the power generating mode, during crosswind flight of the airborne wind turbine 3. However, this may result in the lift from the main wing 10 having a sideways component which may make navigation during landing and take-off difficult in strong wind. Therefore, it may be advantageous adjusting the relation between the length of the first bridle segment 16 and the length of the second bridle segment 17 by means of the control system during landing and take-off. Preferably, this relation may be adjusted so that the main wing 10 of the airborne wind turbine 3 is at least substantially or at least approximately level with the base surface 5, as illustrated in Fig. 16, during landing and take-off.

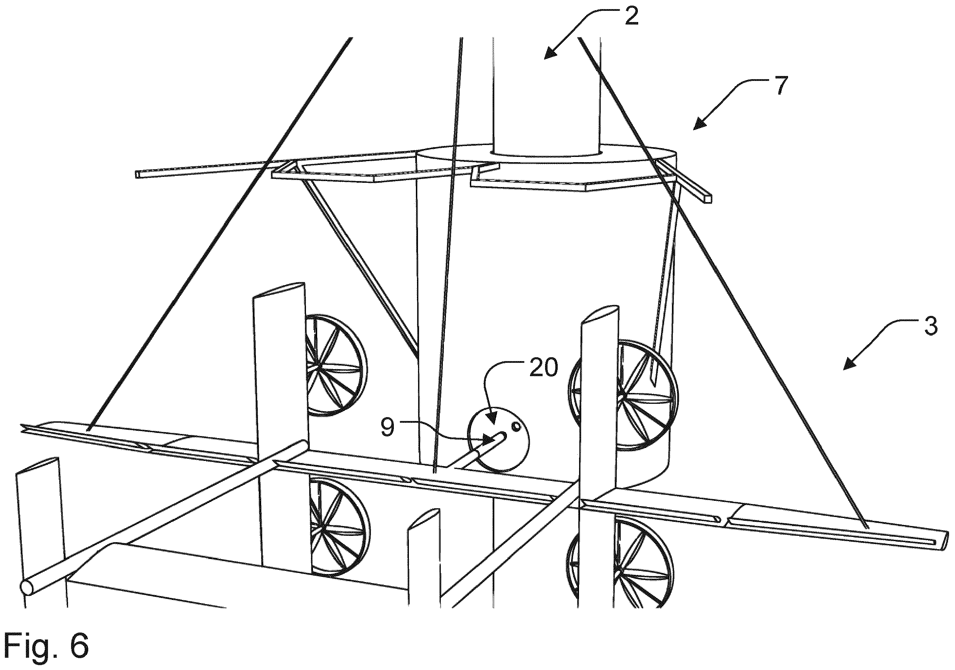

In the embodiment illustrated in Figs. 4 to 11, the docking mechanism 7 is provided with tapering guide elements 20 adapted to guide the movement of the airborne wind turbine 3 just before it connects releasably with the docking mechanism 7. As seen in the figures, the tapering guide elements 20 include a guide cone 34 arranged in front of and concentrically with the connection hole 33 of the docking mechanism 7. The guide cone 34 guides the rounded tip 32 of the front end 9 of the airborne wind turbine 3 into the connection hole 33 of the docking mechanism 7 in order to releasably connect the airborne wind turbine 3 with the docking mechanism 7. Furthermore, as seen in the figures, the tapering guide elements 20 include tapering guide elements 21 adapted to guide the movement of the bridle 15 connecting the tether 4 with the airborne wind turbine 3 just before the airborne wind turbine connects releasably with the docking mechanism 7. In the embodiment illustrated in Figs. 4 and 5, the tether 4 is connected to the main wing 10 by means of the first bridle segment 16 and the second bridle segment 17, but the tether 4 is also connected to the main wing 10 at the middle thereof. In this case, the tapering guide elements 21 have the form of a beam structure 35 mounted on the cylinder 28 of the docking mechanism 7 and forming a first V 36 for the first bridle segment 16, a second V 37 for the tether 4 and a third V 38 for the second bridle segment 17. Of course, the second V 37 for the tether 4 may be omitted, and the tether 4 may be connected to the main wing 10 only by means of the bridle segments 16, 17.

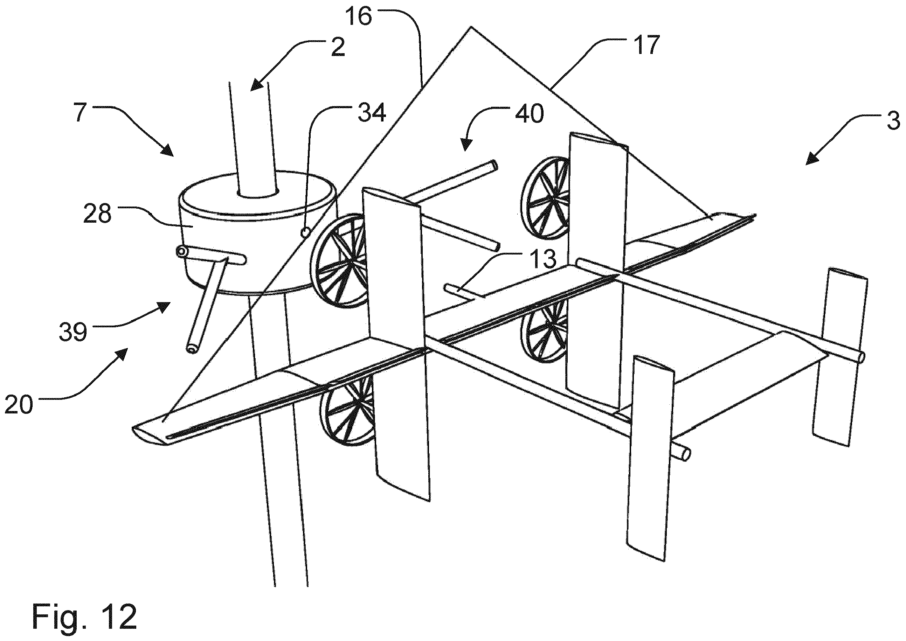

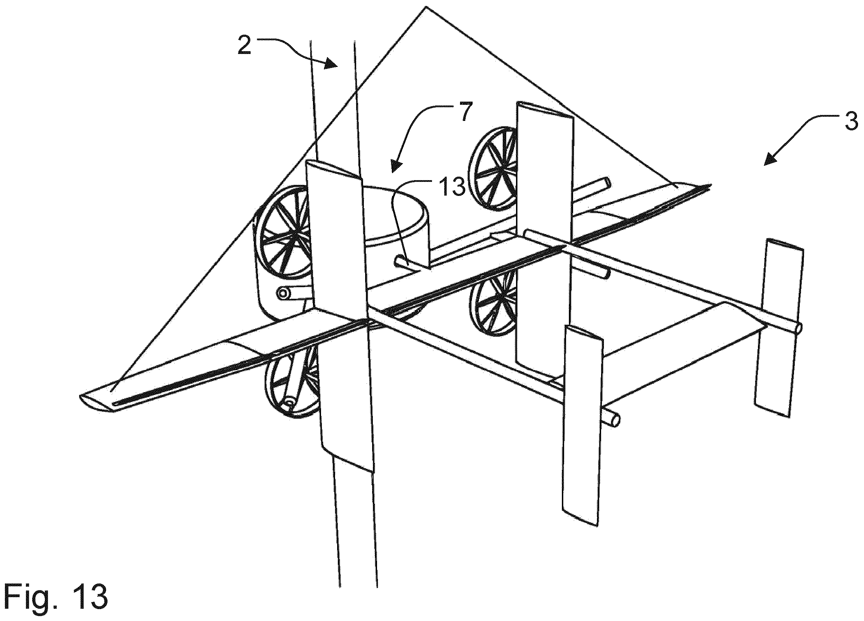

In an alternative embodiment illustrated in Figs. 12 and 13, the docking mechanism 7 is provided with tapering guide elements 20 in the form of a first left V 39 and a second right V 40 for guiding the main wing 10 directly into correct position for the releasable connection of the airborne wind turbine 3 with the docking mechanism 7. Also in this embodiment, the tapering guide elements 20 include a guide cone 34 arranged in front of and concentrically with the connection hole 33 of the docking mechanism 7. The guide cone 34 guides the rounded tip 32 of the front end 9 of the airborne wind turbine 3 into the connection hole 33 of the docking mechanism 7 in order to releasably connect the airborne wind turbine 3 with the docking mechanism 7.

In another not illustrated embodiment, the airborne wind turbine 3 is provided with tapering guide elements 20 adapted interact with elements of the docking mechanism 7 in order to guide the movement of the airborne wind turbine 3 just before the airborne wind turbine connects releasably with the docking mechanism 7.

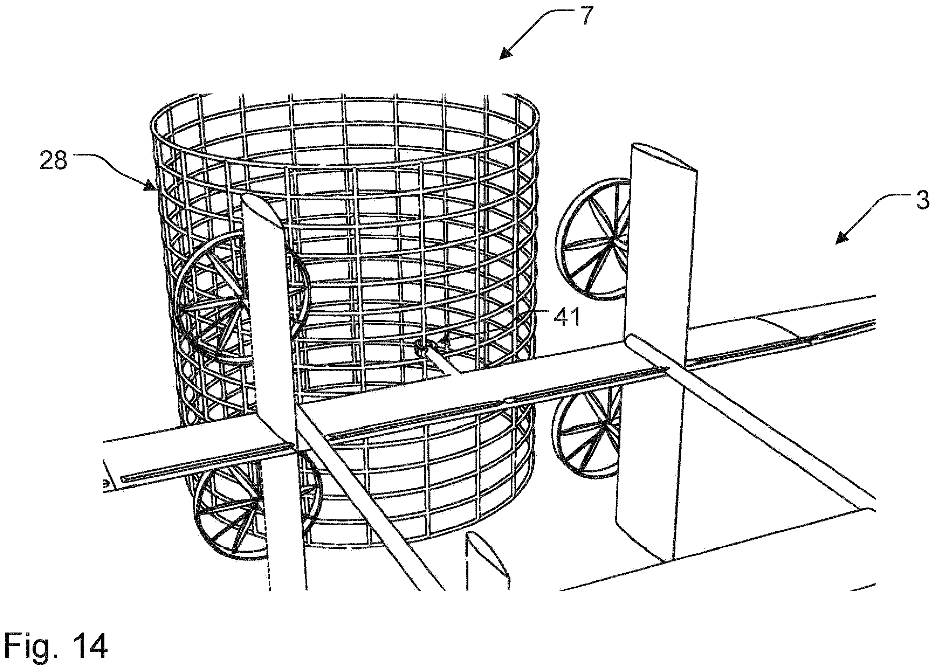

In another embodiment illustrated in Fig. 14 of the docking mechanism 7 and the airborne wind turbine 3, the cylinder 28 of the docking mechanism 7 is formed of a net and the front end 9 of the airborne wind turbine 3 has the form of an automatic gripper 41 adapted to grip the net and thereby releasably connect the airborne wind turbine 3 with the docking mechanism 7. In this way, the airborne wind turbine 3 may connect with the docking mechanism 7 at any orientation about the circumference of the cylinder 28. If the general wind direction changes after landing and connection with the docking mechanism 7, then the docking mechanism 7 may rotate to align the airborne wind turbine 3 with the general wind direction before taking off again, just as it is the case with the other embodiments described above. Instead of a net any other suitable structure of holes in a surface may function. The surface of the cylinder 28 may be suspended or soft to reduce impact and mating forces. The automatic gripper 41 of the front end 9 of the airborne wind turbine 3 may be designed with retractable/actuating hooks/mechanisms, such as a mechanism that is able to expand once it has mated with the surface/net, e.g. an umbrella-like structure. A possibly existing actuator could be used to secure the airborne wind turbine 3; e.g. the tether 4 could be retracted slightly to lock it.

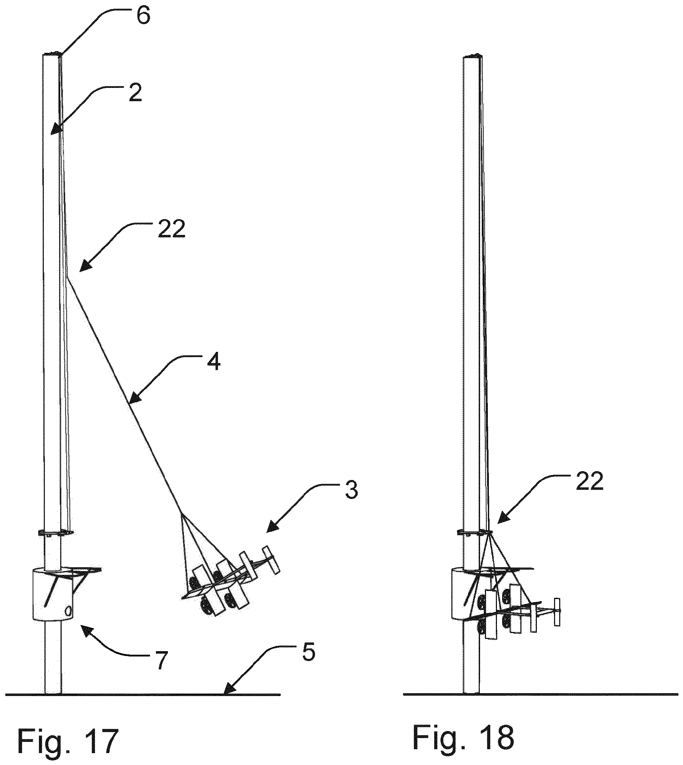

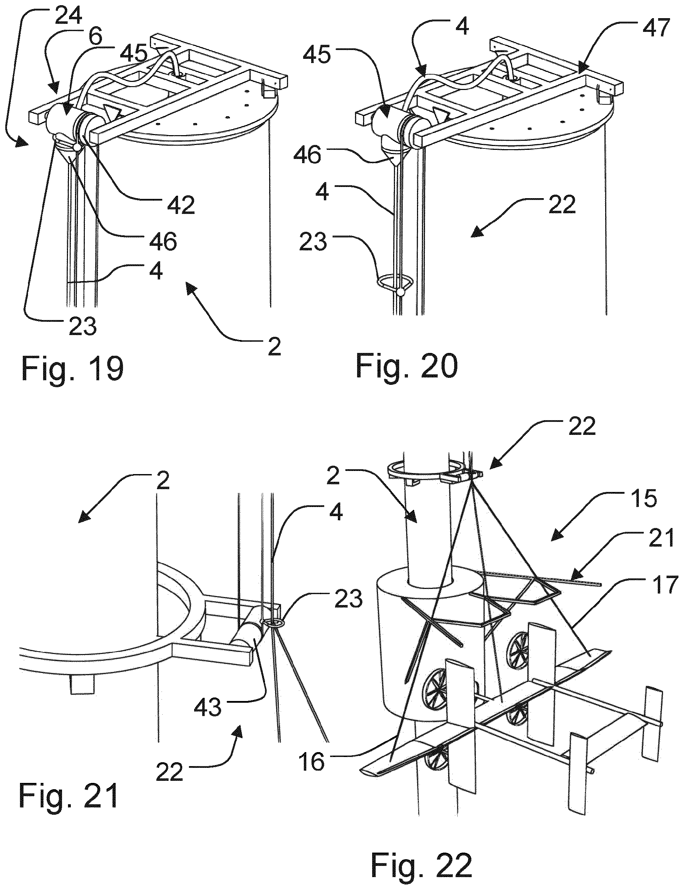

In an embodiment illustrated in Figs. 17 to 22, the tower 2 is provided with a tether guide system 22 including a ringformed element 23 surrounding the tether 4 and being arranged displaceably along the tower 2 from a resting position 24 at the tether attachment point 6 of the tower 2 to a docking position 25 near the docking mechanism 7. In the illustrated embodiment, the ringformed element 23 is arranged displaceably along the tower 2 by means of an endless wire arranged about an upper roller 42 and a lower roller 43. Thereby, the airborne wind turbine 3 may be forced to approach the docking mechanism 7 by displacing the ringformed element 23 in the direction of the docking mechanism 7. This may for instance be advantageous in a situation where the control of the airborne wind turbine 3 has been more or less lost or for instance in a situation of extreme weather. Furthermore, the ringformed element 23 may be used, possibly as an additional element, to releasably hold the airborne wind turbine 3 in place in its parked mode at the docking mechanism 7. As seen in Figs. 19 and 20, the upper roller 42 of the tether guide system 22 is arranged coaxially with and next to a tether attachment roller 45 being provided with a tether guide tip 46 through which the tether 4 extends. Thereby, the tether guide tip 46 may point in different directions depending on where the airborne wind turbine 3 is located. As seen, when the ringformed element 23 is in its resting position 24 at the tether attachment point 6, it is arranged on the tether guide tip 46. The the upper roller 42 and the tether attachment roller 45 are arranged on a bracket 47 extending from the top of the tower 2.

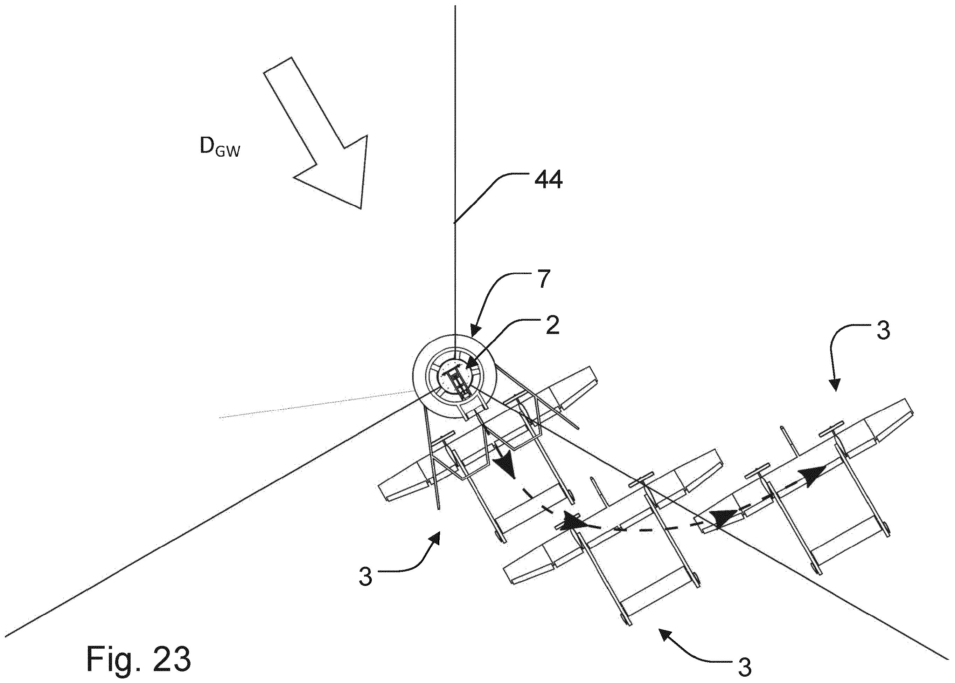

Fig. 23 illustrates navigation of the the airborne wind turbine 3 around guy wires 44 of the tower 2. It may often be beneficial mounting guy wires on the tower 2 as they can effectively transfer the loads of the airborne wind turbine 3 on the tower to the ground. Thereby, bending moments in the tower 2 may be reduced, and the size and requirements for the foundation may be reduced significantly. The guy wires 44 may however pose a challenge during the docking and take-off maneuver as the airborne wind turbine 3 could hit the guy wires 44, and the tether 4 connecting the airborne wind turbine 3 and the tower may get tangled up with the guy wires. As seen in Figs. 1 to 3, the guy wires 44 may be attached to a point near the top of the tower 2, below the tether attachment point 6 so that during power production, the airborne wind turbine 3 is free to rotate as the wind rotates. When landing, the airborne wind turbine 3 is free to land in any space between the guy wires 44 and connect to the docking mechanism 7 of the tower. The airborne wind turbine 3 may rotate around the tower due to wind changes, but the control system may remember in which space that the airborne wind turbine 3 landed. It can then undock downwind and rotate around the tower 2 and exit the space between the guy wires 44 in the same place as it entered.

### List of reference numbers

- D_{GW}: general direction of wind
- D_{L}: longitudinal direction of tower
- D_{T}: transverse direction relative to longitudinal direction of tower
- L: fixed free tether length
- dₗ: longitudinal direction of airborne wind turbine
- h₁: first height of airborne wind turbine
- h₂: second height of airborne wind turbine
- lₗ: longest longitudinal length from attachment of bridle to end
- 1: airborne wind turbine system
- 2: tower
- 3: airborne wind turbine
- 4: tether
- 5: base surface
- 6: tether attachment point
- 7: docking mechanism
- 8: tail end of airborne wind turbine
- 9: front end of airborne wind turbine
- 10: main wing of airborne wind turbine
- 11: tail element
- 12: wind turbine rotor
- 13: coupling mechanism of airborne wind turbine
- 14: coupling mechanism of docking mechanism
- 15: bridle
- 16: first bridle segment
- 17: second bridle segment
- 18: first end of main wing
- 19: second end of main wing
- 20: tapering guide element for guiding airborne wind turbine
- 21: tapering guide element for guiding bridle
- 22: tether guide system
- 23: ringformed element
- 24: resting position of ringformed element
- 25: docking position of ringformed element
- 26: upper bearing of docking mechanism and tower
- 27: lower bearing of docking mechanism and tower
- 28: cylinder of docking mechanism
- 29: shroud of wind turbine rotor
- 30: circumferential groove in cylindrical face of front end
- 31: spring biased tap
- 32: rounded tip of front end
- 33: connection hole of docking mechanism
- 34: guide cone
- 35: beam structure
- 36: first V of beam structure
- 37: second V of beam structure
- 38: third V of beam structure
- 39: first left V
- 40: second right V
- 41: automatic gripper
- 42: upper roller
- 43: lower roller
- 44: guy wire
- 45: tether attachment roller
- 46: tether guide tip
- 47: bracket

## Claims

1. An airborne wind turbine system (1) including a tower (2) and an airborne wind turbine (3) coupled to the tower (2) by means of a tether (4), the airborne wind turbine system (1) being adapted to switch between a power generating mode in which the airborne wind turbine (3) is flying crosswind and downwind of the tower (2), thereby harvesting wind energy, and a parked mode, in which the airborne wind turbine (3) is supported by the tower (2), by landing or take-off of the airborne wind turbine, the tower (2) extending upwards from a base surface (5) and having a longitudinal direction (D_{L}), the tether (4) being connected to the tower (2) at a tether attachment point (6) at a certain longitudinal position of the tower (2) above the base surface (5), a landing surface for the airborne wind turbine (3) being arranged on the tower (2) between the base surface (5) and the tether attachment point (6) of the tower (2), and the tether (4) having such a fixed free tether length (L) between the tether attachment point (6) of the tower (2) and the airborne wind turbine (3) at least during landing or take-off that the airborne wind turbine is prevented from reaching the base surface (5), **characterised in that** the landing surface has the form of a docking mechanism (7) being positioned on the tower (2) at such a longitudinal position of the tower that the airborne wind turbine (3) is able to approach or leave the docking mechanism (7) in a transverse direction (D_{T}) relative to the longitudinal direction (D_{L}) of the tower (2) while at least substantially hanging in the tether (4) having said fixed free tether length (L) being at least substantially stretched between the tether attachment point (6) at the tower (2) and the airborne wind turbine (3), **in that** the docking mechanism (7) and the airborne wind turbine (3) are adapted to releasably connect automatically as the airborne wind turbine approaches the docking mechanism (7) in said transverse direction (D_{T}) relative to the longitudinal direction (D_{L}) of the tower (2), and **in that** the docking mechanism (7) is arranged to rotate about the tower (2) and about an at least substantially vertical axis in relation to the base surface (5).

2. An airborne wind turbine system according to claim 1, wherein the airborne wind turbine (3) has a longitudinal direction (dₗ) extending from a tail end (8) to a front end (9), wherein the front end (9) is provided with at least one main wing (10), wherein the tail (8) end is provided with at least one tail element (11), wherein at least two wind turbine rotors (12) are arranged at the front end (9), wherein the airborne wind turbine (3) is adapted to, in the power generating mode, fly generally in the longitudinal direction (dₗ) extending from the tail (8) end to the front end (9), and wherein the airborne wind turbine (3) is adapted to releasably connect with or disconnect from the docking mechanism (7) with its longitudinal direction (dₗ) being aligned with said transverse direction (D_{T}) relative to the longitudinal direction (D_{L}) of the tower (2).

3. An airborne wind turbine system according to claim 2, wherein the airborne wind turbine (3) is adapted to releasably connect with or disconnect from the docking mechanism (7) with its front (9) end pointing at the docking mechanism (7).

4. An airborne wind turbine system according to claim 2 or 3, wherein the front end (9) of the airborne wind turbine (3) is provided with a coupling mechanism (13) adapted to releasably connect with a corresponding coupling mechanism (14) of the docking mechanism (7).

5. An airborne wind turbine system according to any one of the claims 2 to 4, wherein the tether (4) is connected to the airborne wind turbine (3) at least by means of a bridle (15) having a first bridle segment (16) attached next to a first end (18) of the at least one main wing (10) and a second bridle segment (17) attached next to a second end (19) of the at least one main wing (10), and wherein the relation between the length of the first bridle segment (16) and the length of the second bridle (17) segment is automatically adjustable by means of a control system of the airborne wind turbine system (1).

6. An airborne wind turbine system according to any one of the preceding claims, wherein the docking mechanism (7) and/or the airborne wind turbine (3) is/are provided with tapering guide elements (20) adapted to guide the movement of the airborne wind turbine (3) just before the airborne wind turbine connects releasably with the docking mechanism (7).

7. An airborne wind turbine system according to any one of the preceding claims, wherein the docking mechanism (7) is provided with tapering guide elements (21) adapted to guide the movement of a bridle (15) connecting the tether (4) with the airborne wind turbine (3) just before the airborne wind turbine connects releasably with the docking mechanism (7).

8. An airborne wind turbine system according to any one of the preceding claims, wherein the tower (2) is provided with a tether guide system (22) including a ringformed element (23) surrounding the tether (4) and being arranged displaceably along the tower (2) from a resting position (24) at the tether attachment point (6) of the tower (2) to a docking position (25) near the docking mechanism (7).

9. A method of operating an airborne wind turbine system (1) including a tower (2) and an airborne wind turbine (3) coupled to the tower (2) by means of a tether (4), whereby the airborne wind turbine system (1) is switching between a power generating mode in which the airborne wind turbine (3) is flying crosswind and downwind of the tower (2), thereby harvesting wind energy, and a parked mode, in which the airborne wind turbine (3) is supported by the tower (2), by landing or take-off of the airborne wind turbine (3), the tower (2) extending upwards from a base surface (5) and having a longitudinal direction (D_{L}), the tether (4) being connected to the tower (4) at a tether attachment point (6) at a certain longitudinal position of the tower (2) above the base surface (5), whereby the airborne wind turbine (3) lands on and takes off from a landing surface being arranged on the tower (2) between the base surface (5) and the tether attachment point (6) of the tower (2), and the tether (4) having such a fixed free tether length (L) between the tether attachment point (6) of the tower (2) and the airborne wind turbine (3) at least during landing or take-off that the airborne wind turbine (3) is prevented from reaching the base surface (5), **characterised in that** the landing surface has the form of a docking mechanism (7), **in that** the airborne wind turbine (3) approaches or leaves the docking mechanism (7) in a transverse direction (D_{T}) relative to the longitudinal direction (D_{L}) of the tower (2) while at least substantially hanging in the tether (4) having said fixed free tether length (L) being at least substantially stretched between the tether attachment point (6) at the tower (2) and the airborne wind turbine (3), **in that** the docking mechanism (7) and the airborne wind turbine (3) automatically connect releasably as the airborne wind turbine (3) approaches the docking mechanism (7) in said transverse direction (D_{T}) relative to the longitudinal direction (D_{L}) of the tower (2), and **in that** the docking mechanism (7), if necessary, is rotated about the tower (2) and about an at least substantially vertical axis in relation to the base surface (5) in order to adapt to the general direction (D_{GW}) of wind at least for take-off.

10. A method of operating an airborne wind turbine system according to claim 9, wherein the airborne wind turbine (3) has a longitudinal direction (dₗ) extending from a tail end (8) to a front end (9), wherein the front end (9) is provided with at least one main wing (10), wherein the tail end (8) is provided with at least one tail element (11), wherein at least two wind turbine rotors (12) are arranged at the front end (9), wherein the airborne wind turbine (3), in the power generating mode, is generally flying in the longitudinal direction (dₗ) extending from the tail end (8) to the front end (9), and wherein the airborne wind turbine (3) releasably connects with or disconnects from the docking mechanism (7) with its longitudinal direction (dₗ) being aligned with said transverse direction (D_{T}) relative to the longitudinal direction (D_{L}) of the tower (2).

11. A method of operating an airborne wind turbine system according to claim 10, wherein the airborne wind turbine (3) releasably connects with or disconnects from the docking mechanism (7) with its front end (9) pointing at the docking mechanism (7).

12. A method of operating an airborne wind turbine system according to claim 10 or 11, wherein the front end (9) of the airborne wind turbine (3) is provided with a coupling mechanism (13) releasably connecting with a corresponding coupling mechanism (14) of the docking mechanism (7) when landing.

13. A method of operating an airborne wind turbine system according to any one of the claims 10 to 12, wherein the tether (4) is connected to the airborne wind turbine (3) at least by means of a bridle (15) having a first bridle segment (16) attached next to a first end (18) of the at least one main wing (10) and a second bridle segment (17) attached next to a second end (19) of the at least one main wing (10), and wherein the relation between the length of the first bridle segment (16) and the length of the second bridle segment (17) is adjusted during landing and/or take-off.

14. A method of operating an airborne wind turbine system according to any one of the claims 9 to 12, wherein the docking mechanism (7) and/or the airborne wind turbine (3) is/are provided with tapering guide elements (20) guiding the movement of the airborne wind turbine (3) just before the airborne wind turbine connects releasably with the docking mechanism (7), and wherein, preferably, the docking mechanism (7) is provided with tapering guide elements (21) guiding the movement of a bridle (15) connecting the tether (4) with the airborne wind turbine (3) just before the airborne wind turbine (3) connects releasably with the docking mechanism (7).

15. A method of operating an airborne wind turbine system according to any one of the claims 9 to 14, wherein the tower (2) is provided with a tether guide system (22) including a ringformed element (23) surrounding the tether (4), and wherein, during landing, the ringformed element (23) is displaced along the tower (4) from a resting position (24) at the tether attachment point (6) of the tower (4) to a docking position (25) near the docking mechanism (7).
